Europäisches Patentamt

European Patent Office

Office européen des brevets

(11) Publication number: **0 489 452 A1**

# EUROPEAN PATENT APPLICATION

(21) Application number: **91202949.3**

(22) Date of filing: **13.11.91**

(51) Int. Cl.⁵: **F16D 55/22**, F16D 55/226, F16D 55/228

(30) Priority: **04.12.90 GB 9026296**

(43) Date of publication of application: **10.06.92 Bulletin 92/24**

(84) Designated Contracting States: **AT BE CH DE DK ES FR GB GR IT LI LU NL SE**

(71) Applicant: **GENERAL MOTORS FRANCE**
**56 à 68 Avenue Louis Roche**
**F-92231 Gennevilliers Paris(FR)**

(72) Inventor: **Pantale, David**
**Bat. E., 51 Boulevard Foch**
**F-93800 Epinay sur Seine(FR)**

(74) Representative: **Denton, Michael John et al**
**Patent Section 1st Floor Gideon House 28 Chapel Street**
**Luton Bedfordshire LU1 2SE(GB)**

(54) **Disc brake.**

(57) A disc brake comprises a rotor 12, inner and outer brake pads 14,16, and a caliper housing 124 to which the brake pads are connected. A body member 122 of the caliper housing 124 comprises a cylindrical recess housing a piston 18 to which the inner brake pad 14 is connected. A bridge 126 of the caliper housing 124 connects the body member 122 to an arm member 128, to which the outer brake pad is attached, and comprises first and second bridge portions 130, 132. The second bridge portion 130 is located downstream of the first bridge portion 132, relative to the normal direction of rotation of the rotor 12, and lies at an angle A to the normal to the plane of the rotor, being disposed such that its body member end 140 is upstream of its arm member end 142. The first bridge portion 130 may also lie at an angle to the normal to the plane of the rotor 12. The arrangement reduces asymmetrical wear of the brake pads 14,16; and thereby brake noise and wear.

Fig. 3.

The present invention relates to a disc brake for use in a motor vehicle.

It is known in motor vehicles to provide a disc brake assembly which comprises a rotor, inner and outer brake pads, and a caliper housing having a cylindrical recess containing a piston for urging the inner brake pad into braking engagement with one side of the rotor and an arm member for urging the outer brake pad into braking engagement with the other side of the rotor by reactive force on actuation of the piston. The arm member usually comprises two limbs which are substantially identical and symmetrical, and which in use apply the urging force to the outer brake pad to cause it to come into braking engagement with the rotor. This type of disc brake assembly is commonly referred to as the floating caliper type. In use, it has been found that such an arrangement causes uneven wear of the lining on the brake pad between its leading and trailing sides. This in turn can lead to sticking of the brake pad, and vibration which generates brake squeal or noise.

Similar problems have also been experienced with sliding and fixed calipers.

The present invention seeks to provide an improved disc brake.

According to an aspect of the present invention, there is provided a disc brake for a motor vehicle comprising a rotor; inner and outer brake pads disposed on opposite sides of the rotor and movable into braking engagement therewith; a piston for urging the inner brake pad against the rotor; and a caliper housing comprising a body member having a cylinder positioned on one side of the rotor and containing the piston, a second member positioned on the other side of the rotor and cooperating with the outer brake pad, and a substantially rigid bridge extending between the body member and the second member across the plane of the rotor, the bridge comprising first and second bridge portions each of which portions is connected at a first longitudinal extent thereof to the body member and at a second longitudinal extent thereof to the second member; characterised in that at least one of the bridge portions is disposed at an angle relative to the normal to the plane of the rotor. It has been found that this arrangement reduces asymmetrical wear of the brake pads, and thereby brake noise and wear.

Preferably, relative to the normal direction of rotation of the rotor, the second bridge portion is located downstream the first bridge portion, and is disposed such that its first longitudinal extent is upstream relative to its second longitudinal extent.

The invention extends to disc brake assemblies of the floating, sliding and fixed type. Accordingly, in an embodiment the caliper housing comprises a support member for attaching the caliper housing in floating manner to a support structure of a vehicle, and wherein the second member comprises an arm member to which the outer brake pad is attached. In another embodiment, the second member comprises a cylinder in which is contained a piston for urging the outer brake pad against the rotor, and the caliper housing comprises a support member for attaching the caliper housing in a substantially fixed manner to a support structure of a vehicle.

The invention also extends to a disc brake caliper housing comprising a body member within which at least part of an actuating mechanism of a brake is housable, a second member for supporting an element of the brake, and a substantially rigid bridge extending between the body member and the second member and comprising first and second portions, each portion being connected at a first longitudinal extent thereof to the body member and at a second longitudinal extent thereof to the arm member, wherein at least one of the portions is disposed at an angle relative to the longitudinal extent of the bridge.

Some embodiments of the invention are described below, by way of illustration only, with reference to the accompanying drawings, in which:

Figure 1 shows in cross-section a side elevational view of a prior art disc brake assembly;

Figure 2 is a plan view of the disc brake assembly of Figure 1, not showing the brake rotor;

Figure 3 is a plan view of a first embodiment of disc brake, not showing the rotor;

Figure 4 is a plan view of a second embodiment of disc brake, not showing the rotor;

Figure 5 is a plan view of a third embodiment of disc brake, not showing the rotor; and

Figure 6 is a schematic diagram showing a plan view of a fourth embodiment of disc brake.

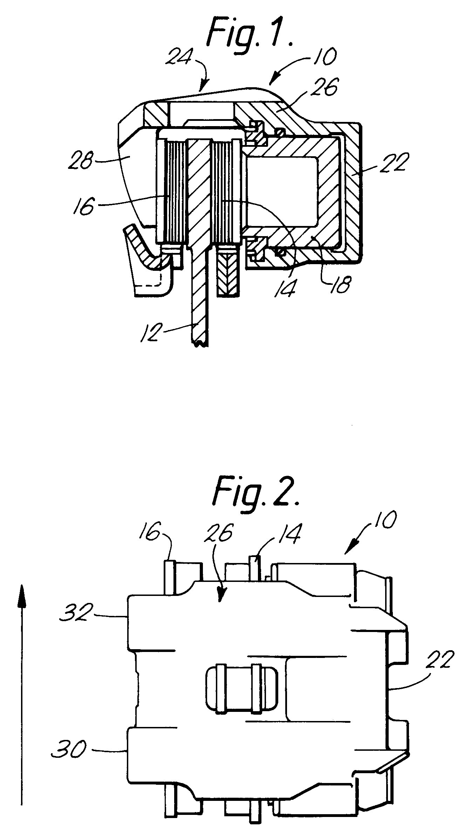

Referring to Figure 1, a conventional disc brake assembly 10 comprises a caliper housing 24 which is formed of a body portion 22, an arm member 28 and a bridge 26. The body portion 22 houses a piston 18 to which an inner brake pad 14 is pressed. An outer brake pad 16 is pressed to the arm 28 and lies opposite the inner brake pad 14 such that the inner and outer brake pads 14, 16 are positioned on opposite sides of brake rotor 12, which in use is connected to a wheel (not shown) of a vehicle.

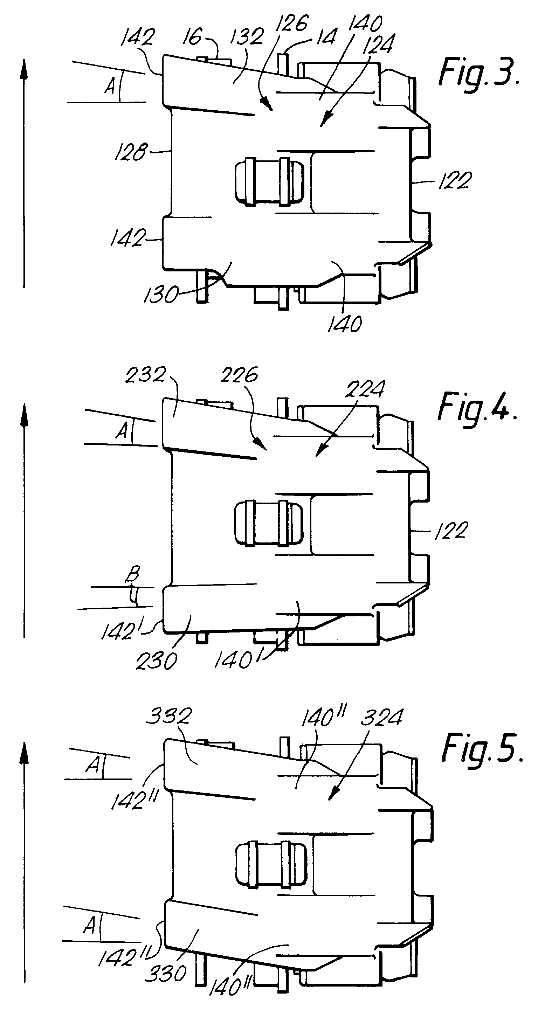

As can be seen in Figure 2, the bridge 26 comprises first and second portions 30, 32 respectively which extend between the body portion 22 and the arm 28 and lie perpendicularly to the plane of the rotor 12.

When the vehicle is travelling forwardly, that is in the normal direction of travel, the rotor rotates in the direction of the arrow in Figure 2.

The brake is actuated by causing the piston to move, hydraulically, out of the body portion 22, thereby urging the inner brake pad 14 against the rotor 12. By reactive force, the caliper housing 24 is made to float such that the outer brake pad 16 is urged against the other side of the rotor 12.

A first embodiment of disc brake is shown in Figure 3, in which all the components of the brake are substantially as described above, apart from the caliper housing which has a modified form. The caliper housing 124 comprises a body member 122 having a cylindrical recess (not shown) for housing the piston 18, and arm member 128, and first and second substantially rigid bridge portions 130, 132 respectively. Each of the bridge portions is connected to the body member 122 at a first longitudinal extent 140, hereinafter referred to as the body member end 140, and to the arm member 128 at a second longitudinal extent 142, hereinafter referred to as the arm member end 142. The first bridge portion 130 lies substantially perpendicularly to the plane of the rotor (not shown) and upstream of the second bridge portion 132 relative to the normal direction of rotation of the rotor 12 (shown by the arrow). The second bridge portion 132 lies at an angle A to the normal to the plane of the rotor 12 and is disposed such that its body member end 140 is upstream relative to its arm member end 142 so that the arm member 128 is laterally offset relative to the body member 122.

The optimum angle A for the second bridge portion 132 varies between different types of caliper housings, and can be found by experiment.

As can be seen in Figure 3, the outer brake pad 16 lies slightly downstream of the inner brake pad 14. This is not essential, as is the case with the other embodiment described below.

Referring to Figure 4, a second embodiment of caliper housing 224 comprises a substantially rigid bridge 226 having a second bridge portion 232 equivalent to the second bridge portion 132 of Figure 3. The first bridge portion 230 lies at a small angle B relative to the normal to the plane of the rotor (not shown) and is disposed such that its body member end 140' is downstream of its arm member end 142', relative to the normal direction of rotation of the rotor (shown by the arrow).

Angle B is less than angle A, and its optimum value can be found by experiment.

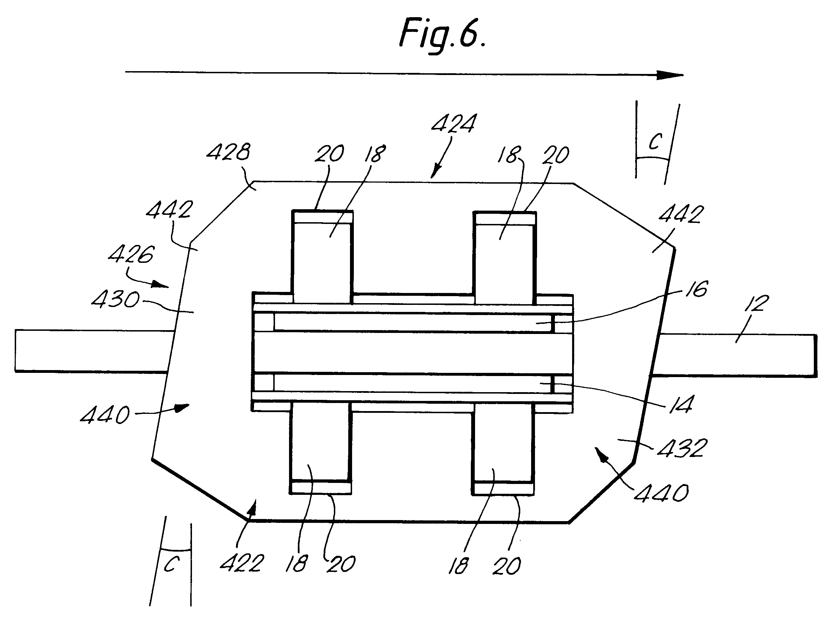

A third embodiment of caliper housing can be seen in Figure 5, in which the first and second substantially rigid bridge portions 330, 332 respectively of the caliper housing 324 both lie at an angle A relative to the normal to the plane of the rotor (not shown), such that their respective body member ends 140'' lie upstream of their respective arm member ends 142'' relative to the normal direction of rotation of the rotor (shown by the arrow).

Figure 6 shows an embodiment of disc brake of the fixed type, that is, of the type that is fixed to a support structure of the vehicle to prevent the caliper housing from floating. This disc brake has two pistons associated with each brake pad although, as is more common, there may be only one piston for each brake pad. The pistons 18 may be of different sizes and may be arranged in a non-symmetrical manner, that is, opposing pistons may lie on different axes.

The caliper housing 424 is formed of two substantially identical halves fixed to one another. The body member 422 comprises two generally cylindrical recesses 20 housing two pistons 18 which are connected to the inner brake pad 14. On the other side of the rotor 12 is located a second member 428 of substantially the same form as the body member 422 and comprising two cylindrical recesses 20 housing two pistons 18 which are connected to the outer brake pad 16.

Connecting the body member 422 to the second member 428, is a substantially rigid bridge 426 formed of first and second bridge portions 430,432 respectively, each of which lies at an angle C to the normal to the plane of the rotor 12. Each of the first and second bridge portions 430, 432 is such that its respective body member end 440 is upstream of its respective second member end 442 relative to the normal direction of rotation of the rotor 12 (shown by the arrow). The optimum angle C can be found by experiment.

Other arrangements of first and second bridge portions 430,432 are possible, as will be apparent from the above.

It has been found that by altering the alignment of one or both of the bridge portions of the caliper housing, as with the embodiments described above, asymmetric wear of the brake pads is reduced, thereby reducing brake noise and wear.

**Claims**

1. A disc brake for a motor vehicle comprising a rotor (12); inner and outer brake pads (14,16) disposed on opposite sides of the rotor and movable into braking engagement therewith; a piston (18) for urging the inner brake pad (14) against the rotor; and a caliper housing (124) comprising a body member (122) having a cylinder positioned on one side of the rotor and containing the piston, a second member (128) positioned on the other side of the rotor and cooperating with the outer brake pad (16), and a substantially rigid bridge (126) extending between the body member and the second member across the plane of the rotor, the bridge comprising first and second bridge portions (130,132) each of which portions is connected at a first longitudinal extent (140) thereof to the body member and at a second longitudinal extent (142) thereof to the second member; characterised in that at least one of the bridge portions is disposed at an angle relative to the normal to the plane of the rotor.

2. A disc brake according to claim 1, wherein, relative to the normal direction of rotation of the rotor, the second bridge portion (132) is located downstream the first bridge portion (130), and is disposed such that its first longitudinal extent (140) is upstream relative to its second longitudinal extent (142).

3. A disc brake according to claim 1 or 2, wherein the first bridge portion (130) is substantially parallel to the normal to the plane of the rotor.

4. A disc brake according to claim 1 or 2, wherein, relative to the normal direction of rotation of the rotor, the first bridge portion (230) is disposed such that its first longitudinal extent (140') is downstream relative to its second longitudinal extent (142').

5. A disc brake according to claim 4, wherein the angle to which the first bridge portion (23) is disposed relative to the normal to the plane of the rotor is less than the angle to which the second bridge portion (232) is disposed relative to the normal to the plane of the rotor.

6. A disc brake according to claim 2, wherein, relative to the normal direction of rotation of the rotor, the first bridge portion (330) is disposed such that its first longitudinal extent (140") is upstream relative to its second longitudinal extent (142").

7. A disc brake according to claim 6, wherein the first and second bridge portions (330,332) are substantially parallel to one another.

8. A disc brake according to any preceding claim, wherein the caliper housing (24) comprises a support member for attaching the caliper housing in floating manner to a support structure of a vehicle, and wherein the second member (28) comprises an arm member (28) to which the outer brake pad (16) is attached.

9. A disc brake according to any one of claims 1 to 7, wherein the second member (428) comprises a cylinder (20) in which is contained a piston (18) for urging the outer brake pad (16) against the rotor, and the caliper housing (424) comprises a support member for attaching the caliper housing in a substantially fixed manner to a support structure of a vehicle.

Fig.1.

Fig.2.

Fig.3.

Fig.4.

Fig.5.

Fig.6.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-3 422 934 (HAMBLING S.K.)<br>* column 2, line 41 - column 3, line 15; figures 1,2,5,10,11 *<br>--- | 1,2,6-8 | F16D55/22<br>F16D55/226<br>F16D55/228 |
| X | EP-A-0 165 088 (BENDIX FRANCE)<br>* figures 1-3 *<br>--- | 1 | |
| X | EP-A-0 190 956 (BENDIX FRANCE)<br>* figures 1,2 *<br>--- | 1 | |
| X | GB-A-2 016 099 (ALFRED TEVES GMBH)<br>* figures 1-3 *<br>----- | 1 | |

TECHNICAL FIELDS SEARCHED (Int. Cl.5 )

F16D

The present search report has been drawn up for all claims

| Place of search | Date of completion of the search | Examiner |
|---|---|---|
| THE HAGUE | 11 MARCH 1992 | BRAEMS C.G.I. |